# DEMANDE DE BREVET EUROPEEN

(11) **EP 3 040 194 A1**
(43) Date de publication de la demande: **06.07.2016**
(21) Numéro de dépôt: 15201772.9
(22) Date de dépôt: 21.12.2015
(51) Int. Cl.: B32B 5/02, B32B 5/12, B32B 5/26

(54) **RUBAN A DEPLOIEMENT HARMONIEUX**

(30) Priorité: 30.12.2014 FR 1403027
(71) Demandeur: THALES, 92400 Courbevoie (FR); Centre National de la Recherche Scientifique, 75016 Paris (FR)
(72) Inventeur: GUINOT, François, 06250 MOUGINS (FR); VEZAIN, Stéphane, 06210 MANDELIEU (FR); STANEK, Didier, 06150 CANNES LA BOCCA (FR); BAUDASSE, Yannick, 06130 GRASSE (FR); BOURGEOIS, Stéphane, 69008 LYON (FR); MARONE-HITZ, Pernelle, 69008 LYON (FR)
(74) Mandataire: Brunelli, Gérald

(57) **Abrégé**

L'invention concerne un ruban présentant un état stable entièrement enroulé (E1) et un état stable entièrement déroulé (E2) configuré pour des applications spatiales, les états intermédiaires (Ei) entre l'état entièrement enroulé (E1) et l'état entièrement déroulé (E2) comprenant une unique portion continue de ruban enroulée (2) de premier rayon de courbure (r₁) supérieur à une valeur seuil (rₛ) et une unique portion continue de ruban déroulée (3) de deuxième rayon de courbure (r₂) inférieur à ladite valeur seuil (rₛ), la valeur du deuxième rayon de courbure (r₂) étant continue sur ladite portion déroulée (3), le ruban (1) comprend un empilement (Emp) comprenant des couches fibrées (Cn) s'étendant selon une direction longitudinale (d_{Long}), ledit empilement (Emp) résultant possédant une symétrie par rapport à un plan longitudinal de ses fibres permettant la compensation des déformations de torsion générées par des variations de température.

## Description

L'invention concerne un élément déployable configuré pour des applications impliquant des variations de températures, et, plus particulièrement, pour des applications spatiales pour lesquelles l'amplitude de température peut atteindre 300°C. Plus précisément, l'invention concerne un ruban déployable ou déroulable, et notamment un ruban bistable.

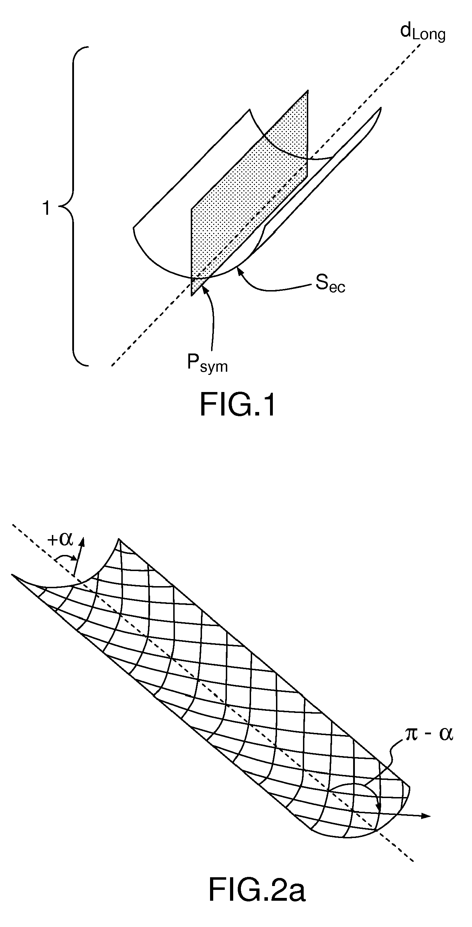

On entend par « ruban » 1, représenté sur la figure 1, un tronçon de matériau composite comprenant des fibres, ou, de matériau tissé, de forme allongée s'étendant selon une direction longitudinale d_{Long} à section Sec mince symétrique par rapport à la direction longitudinale d_{Long}, typiquement l'épaisseur de la section Sec est négligeable devant la largeur et la longueur du ruban 1.

En l'espèce, le ruban 1 s'étend selon la direction longitudinale d_{Long} et présente un plan de symétrie P_{sym} selon ladite direction longitudinale d_{Long}. II comprend un matériau composite dont la matrice comprend une résine dans laquelle s'étendent des fibres.

Un document de l'art antérieur EP0891248 propose un élément étirable configurable dans un premier état bobiné dans lequel l'élément est bobiné sensiblement parallèlement à un premier axe, et dans un deuxième état étiré dans lequel l'élément s'étend sensiblement parallèlement à un deuxième axe. L'élément étirable est constitué d'un substrat et d'au moins une couche fibrée dont les fibres sont croisées. Chacune des fibres est orientée sous un angle compris entre 0 degré et 90 degrés par rapport au premier axe de manière que, lorsque l'élément est étiré dans une direction sensiblement parallèle au deuxième axe, lesdites fibres croisées donnent lieu à une contraction dans une direction orientée sous un certain angle par rapport au deuxième axe, pour placer l'élément au deuxième état.

Notons que tous les écarts angulaires cités dans la suite de cette demande sont orientés dans le sens horaire ou anti-trigonométrique.

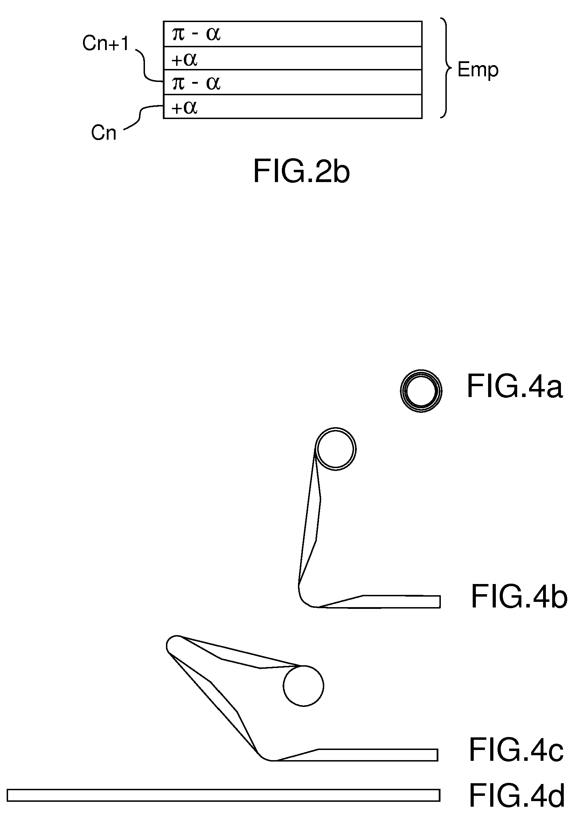

Par ailleurs, il est aussi connu de réaliser des rubans 1 en superposant des couches comprenant un même matériau fibré, selon le principe représenté sur les figures 2a et 2b.

Plus précisément, il s'agit sur la figure 2a d'un ruban comprenant un empilement Emp ou une superposition de quatre couches fibrées. La direction d'orientation des fibres d'une des couches Cn forment un écart angulaire α avec la direction longitudinale d_{Long}, l'écart angulaire α étant compris entre 0° et 90°. Les fibres de l'autre couche Cn+1 forment un écart angulaire (π-α) avec la direction longitudinale d_{Long}. En d'autres termes, l'entièreté d'une couche comprend au moins un premier groupe de fibres dont la direction forme un premier écart angulaire α avec la direction longitudinale d_{Long} et l'entièreté de la couche consécutive comprend le premier groupe de fibres dont la direction forme un écart angulaire (π-α) avec la direction longitudinale d_{Long}.

La figure 2b est une représentation de l'empilement Emp de la figure 2a, il est composé de quatre couches fibrées Cn dont la direction des fibres forme un écart angulaire avec la direction longitudinale d_{Long}, la valeur de l'écart angulaire alterne entre (+α) et (π-α) entre la couche Cn et la couche suivante Cn+1.

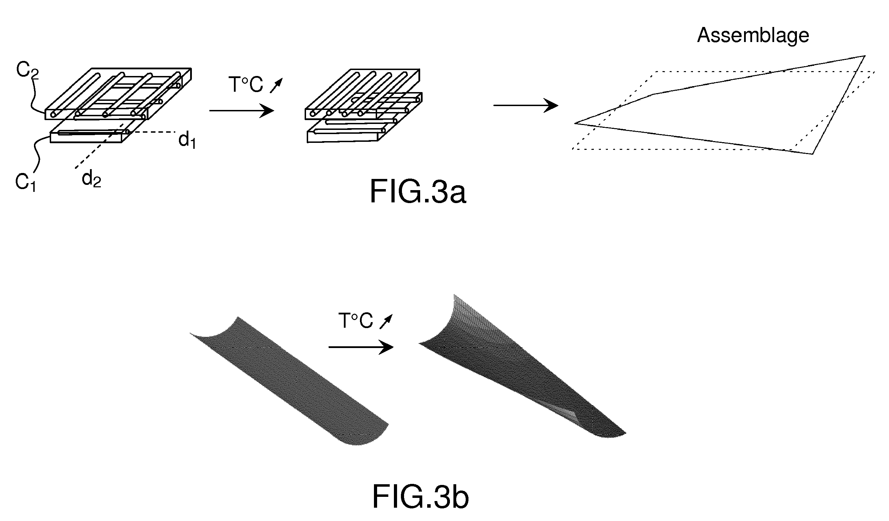

Ce type de ruban antisymétrique évite le couplage entre la flexion et la torsion, toutefois, il est sensible aux variations de température, comme le met en évidence les figures 3a et 3b.

La figure 3a représente schématiquement un ruban 1 comprenant deux couches de matériaux composites fibrés dont les fibres de la première couche C1 sont orientées selon une première direction d1 et les fibres de la deuxième couche C2 sont orientées selon une deuxième direction d2. Sous l'effet de l'augmentation de la température, notamment, les couches de matériau composite C1, C2 se dilatent chacune dans une direction transversale à la direction des fibres, les fibres ayant un coefficient de dilatation très faible, de l'ordre de quelques 10⁻⁶K⁻¹, on observe alors une torsion du ruban 1.

La figure 3b montre de manière évidente les torsions qui apparaissent lorsque le ruban 1 est soumis à des variations de températures. En effet, le ruban 1 (à gauche) qui s'étend selon la direction longitudinale d_{Long} présente une section Sec dont la valeur du rayon de courbure rₛ selon une direction transverse d_{Transv} perpendiculaire à la direction longitudinale d_{Long} est sensiblement constant sur toute la section Sec, autrement dit, le ruban 1 présente une forme sensiblement concave de manière homogène. Après une augmentation de la température, on peut notamment observer sur la figure de droite un soulèvement plus important de deux des sommets diagonalement opposés du ruban 1.

On comprend alors aisément qu'un ruban 1 présentant des torsions en cas de variation de température ne pourra pas s'enrouler et/ou se dérouler de manière cylindrique.

Les figures 4 représentent un processus de déploiement d'un ruban classique pour passer d'un état entièrement enroulé sur la figure 4a à un état entièrement déroulé sur la figure 4d, le processus de déroulement est dit chaotique. Les figures 4b et 4c illustrent des états intermédiaires présentant plusieurs zones enroulées et/ou plusieurs zones déroulées. Le processus de déroulement est saccadé, irrégulier.

Contrairement au processus de déroulement chaotique, un processus de déroulement d'un ruban 1 est qualifié « d'harmonieux » entre un premier état enroulé et un deuxième état déroulé lorsque l'ensemble des états intermédiaires entre le premier et le deuxième état comprennent une unique portion continue de ruban enroulé dont la valeur du rayon de courbure est supérieure à une valeur seuil et une unique portion continue de ruban déroulé dont la valeur du rayon de courbure est inférieure à la valeur de seuil et est continue sur la portion déroulée. En d'autres termes, le processus de déroulement s'effectue de manière régulière sans zone de pliage du ruban 1. Au cours du processus de déroulement, la longueur de la portion continue de ruban enroulée décroît au cours du temps, celle de la portion continue déroulée croît au cours du temps.

Un but de l'invention est de pallier les inconvénients cités précédemment en proposant un ruban présentant un processus de déroulement/enroulement harmonieux dans un environnement présentant d'importantes variations de températures pouvant aller jusqu'à 300°C.

Selon un aspect de l'invention, il est proposé un ruban pouvant présenter un état stable entièrement enroulé et un état stable entièrement déroulé configuré pour des applications spatiales, l'ensemble des états intermédiaires entre l'état entièrement enroulé et l'état entièrement déroulé comprenant une unique portion continue de ruban enroulée d'un premier rayon de courbure supérieur à une valeur de seuil et une unique portion continue de ruban déroulée d'un deuxième rayon de courbure inférieur à ladite valeur seuil, la valeur du deuxième rayon de courbure étant continue sur ladite portion déroulée. Le ruban comprend un empilement comprenant des couches fibrées s'étendant selon une direction longitudinale, ledit empilement résultant possédant une symétrie par rapport à un plan longitudinal de ses fibres permettant une compensation des déformations de torsion générées par des variations de température. La valeur de seuil du rayon de courbure dépend des caractéristiques physico-chimiques des matériaux constituant le ruban.

Ainsi réalisé, il est possible de déclencher le déroulement du ruban à partir d'une des extrémités du ruban. De plus, le ruban selon l'invention ne nécessite pas de système de guidage pour permettre le déroulement harmonieux. En d'autres termes, le processus de déroulement harmonieux est dû aux caractéristiques structurelles intrinsèques du ruban.

Avantageusement, la portion déroulée est rectiligne, en d'autres termes, le premier rayon de courbure est infini.

Selon un premier mode de réalisation, l'empilement comprend au moins deux couches, les couches comprenant un même matériau comprenant deux types de fibres unidirectionnelles, de directions différentes. Avantageusement, l'empilement comprend :
- une première couche comprenant deux parties dont les fibres des deux parties ont une orientation symétrique par rapport à un plan longitudinal Psym, et dont une première partie est munie d'un premier type de fibres formant un premier écart angulaire et d'un deuxième type de fibres formant un deuxième écart angulaire avec la direction longitudinale, et
- une deuxième couche comprenant deux parties symétriques disposées en vis-à-vis respectifs des deux parties symétriques de la première couche comprenant le premier type de fibres formant un troisième écart angulaire avec la direction longitudinale et le deuxième type de fibres formant un quatrième écart angulaire avec la direction longitudinale, le premier écart angulaire et le troisième écart angulaire étant supplémentaires.

Selon un deuxième mode de réalisation alternatif, l'empilement comprend au moins quatre couches, les couches comprenant au moins un matériau comprenant des fibres unidirectionnelles. Avantageusement, l'empilement comprend :
- une première couche comprenant deux parties dont les fibres des deux parties ont une orientation symétrique longitudinalement et dont une première partie comprenant au moins un premier matériau comprenant des fibres formant un premier écart angulaire avec la direction longitudinale et une deuxième partie comprenant au moins un deuxième matériau, et
- une deuxième couche comprenant deux parties symétriques disposées en vis-à-vis respectifs des deux parties symétriques de la première couche et dont une première partie comprenant le deuxième matériau, les fibres du deuxième matériau formant un troisième écart angulaire avec la direction longitudinale, le premier écart angulaire et le troisième écart angulaire étant supplémentaires,
- la troisième couche est identique à la première couche et la quatrième couche selon la direction de l'empilement est identique à la deuxième couche, le premier et le deuxième matériau ayant des coefficients de dilatation sensiblement identiques. Préférentiellement, le premier et deuxième matériaux sont identiques.

Avantageusement, le ruban comprend au moins deux couches consécutives dont la première partie de l'une et la deuxième partie de l'autre sont monolithiques ce qui permet de renforcer le ruban et évite la formation de zone de faiblesse pouvant générer un pliage du ruban.

Avantageusement, le ruban comprend en outre un substrat sur lequel est disposée la première couche de l'empilement.

Avantageusement, le ruban comprend en outre une couche comprenant un matériau non tissé intercalé entre deux couches fibrées de l'empilement. L'ajout d'une couche non tissée permet notamment de renforcer la structure du ruban voire d'y adjoindre des propriétés d'élasticité, par exemple, pour lui conférer une plus grande souplesse.

Avantageusement, les couches comprennent au moins deux tronçons séparés selon une direction transverse perpendiculaire à la direction longitudinale et comprennent des matériaux fibrés différents ce qui permet notamment de modifier le premier rayon de courbure de la portion enroulée.

Avantageusement, la largeur du ruban selon la direction transverse varie selon la direction longitudinale ce qui permet de faciliter l'enroulement en évitant notamment la formation de vrilles.

Avantageusement, le rayon de courbure selon la direction transverse du ruban sur la portion déroulée varie selon la direction transverse et/ou longitudinale.

Le ruban est un ruban bistable. On entend par « ruban bistable » un ruban à déploiement harmonieux stable à la fois dans son état entièrement enroulé et dans son état entièrement déroulé. Le ruban bistable ne nécessite aucune force extérieure pour être maintenu enroulé.

L'invention sera mieux comprise et d'autres avantages apparaîtront à la lecture de la description qui va suivre donnée à titre non limitatif, et, grâce aux figures annexées parmi lesquelles :
- la figure 1, déjà décrite, est une représentation schématique d'un ruban selon l'art connu,
- la figure 2, déjà décrite, est un mode de réalisation d'un ruban selon l'art connu,
- la figure 3, déjà décrite, illustre les torsions d'un ruban sous l'effet d'une augmentation de la température, selon l'art connu,
- les figures 4, déjà décrites, illustrent un processus de déploiement chaotique,
- les figures 5 schématisent un processus de déploiement harmonieux au sens de l'invention,
- la figure 6 représente un ruban à déploiement harmonieux, selon l'invention,
- la figure 7 met en évidence les compensations de l'intensité des forces génératrices de torsions d'un ruban réalisé selon l'invention,
- la figure 8 est une représentation schématique d'un premier mode de réalisation du ruban, selon un aspect de l'invention,
- la figure 9 propose une variante du premier mode de réalisation,
- la figure 10 propose une autre variante du premier mode de réalisation,
- la figure 11 représente une autre variante du premier mode de réalisation,
- la figure 12 représente une autre variante du premier mode de réalisation, et
- la figure 13 représente un deuxième mode de réalisation du ruban comprenant au moins deux couches, selon un aspect de l'invention.

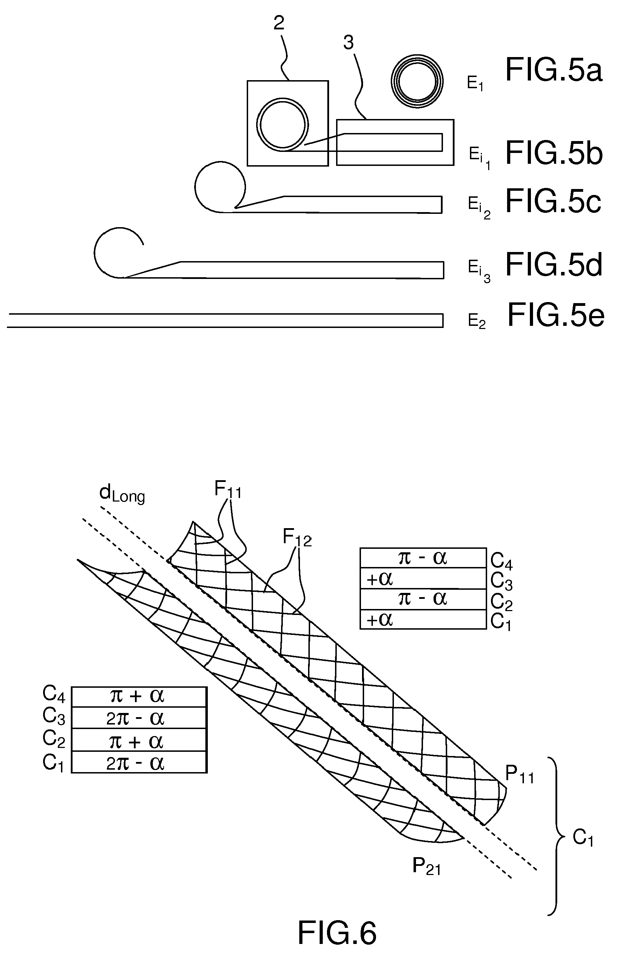

Les figures 5 représentent différents états du ruban au cours d'un processus de déroulement harmonieux, au sens de l'invention.

La figure 5a représente le ruban 1 dans son état entièrement enroulé E₁ présentant un premier rayon de courbure r1. La figure 5b illustre un état intermédiaire Ei₁ par lequel passe le ruban 1 lors de son déroulement. L'état intermédiaire Ei₁ comprend une unique portion continue de ruban enroulé 2 et une unique portion continue de ruban déroulé 3 présentant un deuxième rayon de courbure r2. Les figures 5c et 5d représentent des états intermédiaires Ei₂, Ei₃ plus avancés dans le processus de déroulement, le nombre de spires sur la portion enroulée 2 diminuant au fur et à mesure du processus de déploiement, les états intermédiaires Ei₂, Ei₃ comprennent aussi une unique portion continue de ruban enroulé 2 et une unique portion continue de ruban déroulé 3. La figure 5e illustre le cas particulier du ruban 1 dans son état entièrement déroulé E₂ de manière rectiligne, la valeur du deuxième rayon de courbure r2 étant infinie. Toutefois, l'unique portion de ruban déroulé 3 n'est pas nécessairement rectiligne, elle peut présenter un deuxième rayon de courbure r2 dont la valeur est inférieure à une valeur seuil rₛ et continue sur l'unique portion continue du ruban déroulé 3. Ainsi, l'unique portion de ruban déroulé 3 est exempte de zone de pliage.

La figure 6 illustre le principe d'un ruban à déploiement harmonieux selon l'invention.

Le ruban 1 s'étend selon une direction longitudinale d_{Long}, il comprend un empilement Emp de couches fibrées Cn, n étant le numéro de la couche, les couches Cn présentant une symétrie longitudinale de ses fibres.

Avantageusement les couches comprennent un matériau composite comprenant une résine époxy ou cyanate dans laquelle s'étendent des fibres de carbone, de quartz, de verre ou de kevlar (Marque déposée). Alternativement, les couches comprennent un matériau tissé.

Une couche Cn comprend alors deux parties : une première P1 n, et une deuxième partie P2n.

La première partie P11 d'une première couche C1 comprend au moins un premier type de fibres F11, la direction des fibres F11 formant un écart angulaire +α avec la direction longitudinale d_{Long}.

La première partie P12 d'une deuxième couche fibrée C2 consécutive à la première couche, comprend au moins un deuxième type de fibres F12 formant un écart angulaire (π-α) avec la direction longitudinale d_{Long}.

Les fibres F13 de la première partie P13 de la troisième couche C3 formant un écart angulaire +α avec la direction longitudinale d_{Long}. Les fibres F14 de la première partie P14 de la quatrième couche C4 formant un écart angulaire de (π-α) avec la direction longitudinale d_{Long}. L'empilement des premières parties des couches est résumé sur le tableau situé en haut à droite de la figure 6. On observe donc une alternance des valeurs des écarts angulaires entre +α et (π -α).

Sur la deuxième partie P2n d'une couche Cn donnée, la direction des fibres F2n forme par rapport à la direction longitudinale d_{Long} un écart angulaire dont la valeur est opposée à l'écart angulaire que forme la direction des fibres F1n sur la première partie de la couche Cn. Autrement dit, sur la première partie P11 de la première couche C1 la direction des fibres forme un écart angulaire de +α et sur la deuxième partie P12 de la première couche C1 la direction des fibres forme un écart angulaire (2π-α), c'est-à-dire (-α) selon le sens antihoraire. L'empilement des deuxièmes parties des couches Cn est résumé sur le tableau situé en bas à gauche de la figure 6. On observe donc une alternance des valeurs des fibres entre les valeurs (2π-α) et (π+α).

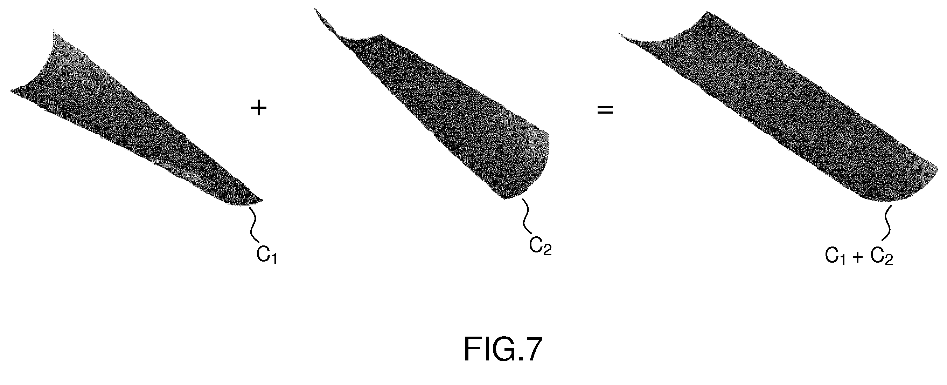

La figure 7 représente un ruban à déploiement harmonieux selon l'invention et met en évidence une faible déformation de torsion, générées par les variations de température par rapport au ruban réalisé selon l'art antérieur.

En l'espèce, le ruban 1 de la figure 7 comprend deux couches Cn. Une première couche C1 se vrille dans un sens et une deuxième couche C2 dans l'autre sens lorsqu'elles sont soumises à des variations de températures.

L'association des ces deux couches C1 et C2 permet de compenser globalement les déformations de torsions. Les forces résultantes de la dilatation présentent des intensités sensiblement égales sur toutes les extrémités du ruban 1 et le ruban ne subit pas de torsion. En l'espèce, le plan de symétrie Psym est conservé et il n'y a pas de rotation des sections autour de l'axe longitudinal du ruban.

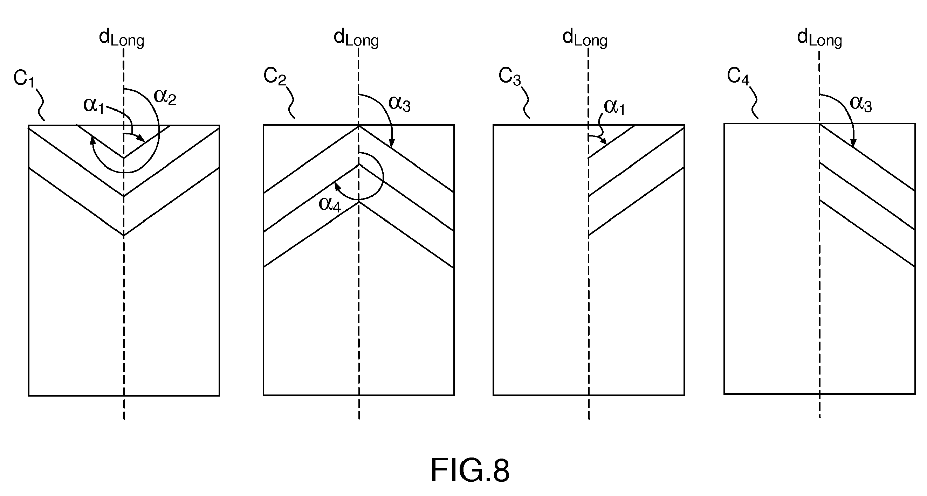

La figure 8 représente un premier mode de réalisation de l'invention. En l'espèce l'empilement Emp comprend quatre couches C1, C2, C3 et C4, chacune d'elles présentant une symétrie longitudinale des fibres.

La première couche de l'empilement C1 comprend deux parties dont la direction des fibres est symétrique par rapport à la direction longitudinale d_{Long}.

En l'occurrence, la première partie P11 de la première couche C1 comprend un premier matériau Mat1 présentant un premier type de fibres dont la direction forme un premier écart angulaire +α1 avec la direction longitudinale d_{Long}. La deuxième partie P21 symétrique par rapport à la direction longitudinale comprend le premier matériau Mat1 dont la direction du premier type de fibres forme un deuxième écart angulaire +α2, le deuxième écart angulaire +α2 correspondant à 2π-α, ou -α1 selon le sens antihoraire.

La deuxième couche de l'empilement C2 comprend aussi deux parties symétriques situées en vis-à-vis respectifs des deux parties de la première couche C1.

La première partie P12 de la deuxième couche C2 comprend le premier matériau Mat1 présentant le premier type de fibres dont la direction forme un troisième écart angulaire +α3 avec la direction longitudinale d_{Long}, +α3 correspondant à π-α1. La deuxième partie P22 symétrique par rapport à la direction longitudinale d_{Long} comprend le premier matériau Mat1 dont la direction des fibres forme un quatrième écart angulaire +α4 par rapport à la direction longitudinale d_{Long}, le quatrième écart angulaire +α4 correspondant à π +α1.

La troisième couche C3 est identique à la première couche C1 et la quatrième couche C4 est identique à la deuxième couche C2.

Selon une première variante de l'invention, non représentée sur les figures, la deuxième partie P21 comprend un deuxième matériau Mat2, de coefficient de dilatation sensiblement égal à celui du premier matériau Mat1. Le deuxième matériau Mat2 présente un deuxième type de fibres.

La première partie P21 de la première couche C1 comprend le matériau Mat1 comme dans le cas précédent, représenté sur la figure 8. La deuxième partie P22 symétrique par rapport à la direction longitudinale comprend le deuxième matériau Mat2 dont la direction du deuxième type de fibres forme le deuxième écart angulaire +α2, le deuxième écart angulaire correspondant à 2π-α1 comme précédemment.

La deuxième couche C2 de l'empilement comprend aussi deux parties symétriques situées en vis-à-vis respectifs des deux parties de la première couche C1.

La première partie P12 de la deuxième couche C2 comprend le deuxième matériau Mat2 présentant le deuxième type de fibres dont la direction forme un troisième écart angulaire +α3 avec la direction longitudinale selon le sens horaire, +α3 correspondant à π-α1. La deuxième partie P22 symétrique par rapport à la direction longitudinale comprend le premier matériau Mat1 dont la direction du premier type de fibres forme un quatrième écart angulaire +α4, le quatrième écart angulaire +α4, +α4 correspondant à π +α1.

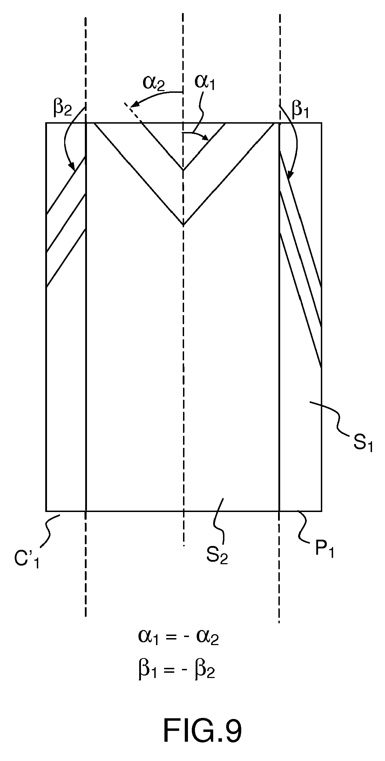

Selon une autre variante de l'invention représentée sur la figure 9, la première et deuxième parties sont divisées en au moins deux segments S1 et S2.

En l'espèce, la première partie P11 de la première couche C1 est divisée en deux segments S1 et S2 selon la direction longitudinale d_{Long}.

Le premier segment S1 comprend le premier matériau Mat1 dont l'orientation des fibres forme un premier écart angulaire +α1 avec la direction longitudinale. Le deuxième segment S2 comprend un troisième matériau Mat 4 fibré dont l'orientation des fibres forme un cinquième écart angulaire β1 avec la direction longitudinale.

La deuxième partie P12 de la première couche présente une symétrie longitudinale. Elle comprend deux segments S1 et S2 comprenant le premier et troisième matériau. L'orientation de chaque type de fibres sur chacune des parties respectivement étant symétriques longitudinalement.

L'empilement sur la première partie de quatre couches comprenant deux segments se résume comme suit (α1; β1), (π-α1; π-β1), (α1;β1), (π-α1; π-β1)

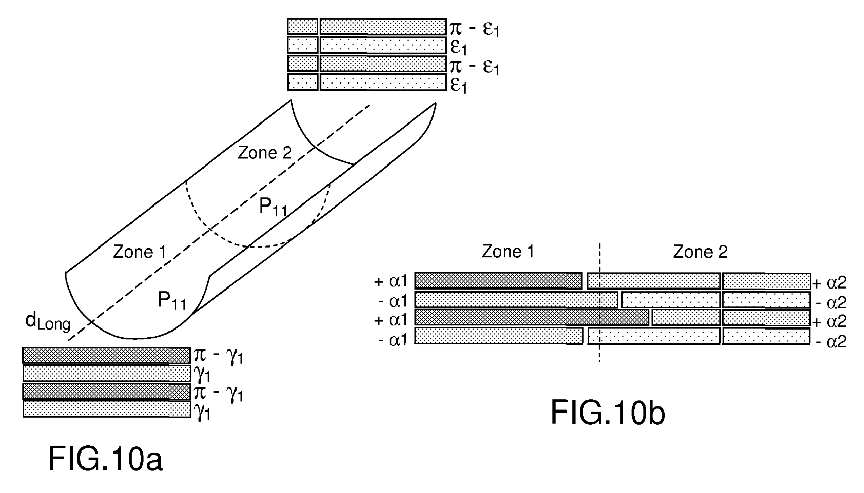

Selon une autre variante, représentée sur la figure 10a, le ruban 1 dont la direction des fibres est symétrique par rapport à la direction longitudinale d_{Long} comprend une pluralité de zones selon une direction transverse d_{Transv} perpendiculaire à la direction longitudinale d_{Long}.

En l'occurrence, le ruban comprend deux zones Z1 et Z2. La première zone Z1 de la première couche C1 présente une symétrie longitudinale entre la première P11 et la deuxième partie P12. Sur la figure 10a, la symétrie longitudinale des fibres n'est pas représentée dans l'objectif de simplifier la compréhension de cette figure.

La première partie P11 de la première couche C1 de la première zone Z1 comprend un cinquième matériau Mat5 dont l'orientation des fibres forme un sixième écart angulaire avec la direction longitudinale de valeur γ1. L'empilement sur la première partie P11 de la première zone Z1 comprend le cinquième matériau et l'orientation des fibres alterne entre les valeurs (+γ1) et (π-γ1). La deuxième partie P21 de la première couche C1 de la première zone Z1 est symétrique longitudinalement.

La première partie P11 de la première couche C1 de la deuxième zone Z2 comprend un sixième matériau Mat6 dont l'orientation des fibres forme un septième écart angulaire ε1 avec la direction longitudinale d_{Long}. L'empilement sur la première partie P11 de la première zone Z1 comprend le cinquième matériau et l'orientation des fibres alterne entre les valeurs (+ε1) et (π-ε1). La deuxième partie P21 de la première couche C1 de la première zone Z1 est symétrique longitudinalement.

Avantageusement, la limite entre les zones comprenant un matériau différent n'est pas linéaire, comme cela est représenté sur la figure 10b. Il existe une section de ruban sur laquelle les deux matériaux se chevauchent de manière à ne pas créer de zone de faiblesse dans le ruban 1 ou en d'autres termes des zones sur lesquelles pourrait apparaître un pliage ou de déchirement.

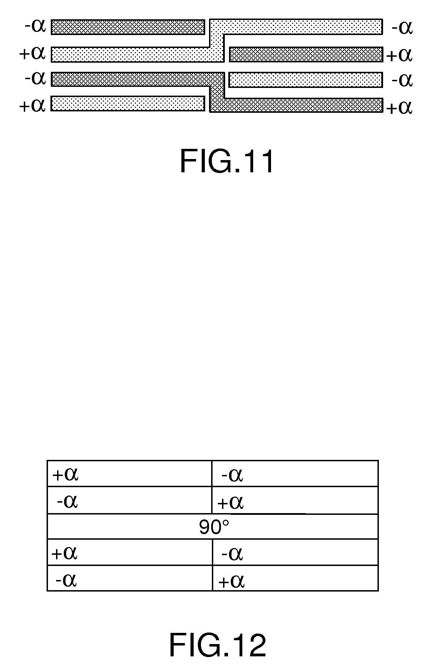

Selon une autre variante, représentée sur la figure 11, les deux parties P1 et P2 du ruban 1 sont raccordées à l'aide d'au moins une des couches Cn de l'empilement Emp. En l'espèce, l'empilement Emp comprend quatre couches présentant une symétrie de l'orientation des fibres longitudinales, la première partie d'une couche P1n et la deuxième partie de la couche suivante P2n+1 sont monolithiques. En l'occurrence, la première partie de la première couche P11 et la deuxième partie de la deuxième couche P22 sont monolithiques ainsi que la deuxième partie de la troisième couche P23 et la première partie de la quatrième couche P14.

Eventuellement, l'empilement Emp comprend en outre un substrat sur lequel s'étend la première couche C1. Avantageusement, l'empilement Emp comprend en outre une couche non fibrée ou dont les fibres sont parallèles à la direction longitudinale intercalée entre deux couches fibrées de l'empilement Emp, figure 12.

Avantageusement, le rayon de courbure de la section Sec du ruban selon une direction transversale d_{Transv} perpendiculaire à la direction longitudinale d_{Long} varie selon la direction longitudinale d_{Long} et/ou la direction transverse d_{Transv}.

Avantageusement, la largeur du ruban varie selon la direction longitudinale de manière à faire varier le rayon de courbure de l'enroulement.

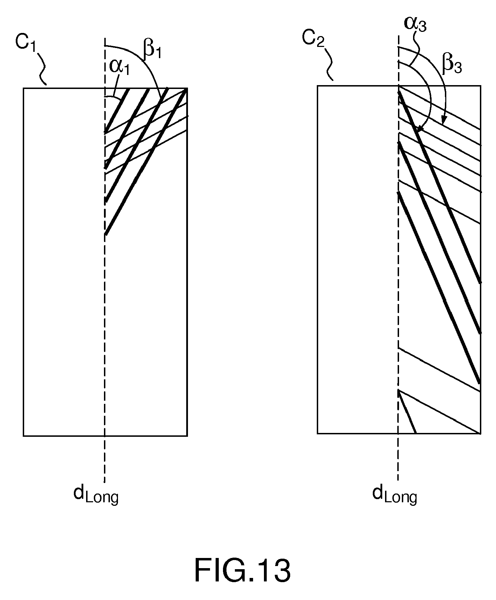

Selon un deuxième mode de réalisation, représentée sur la figure 13, l'empilement Emp comprend au moins deux couches C1 ; C2 fibrées comprenant premier matériau Mat1 comprenant deux types de fibres, chaque type de fibres étant orienté selon une unique direction.

En l'occurrence, la première partie P11 de la première couche C1 comprend un sixième matériau Mat 6 comprenant un premier type de fibre dont la direction forme un premier écart angulaire α1 avec la direction longitudinale d_{Long} et un deuxième type de fibres dont la direction forme un deuxième écart angulaire β1 avec la direction longitudinale.

La deuxième partie de la première couche P21 comprend le sixième matériau Mat 6. Les directions des premiers et deuxièmes types de fibres de la première et deuxième parties sont symétriques longitudinalement, respectivement.

La première partie P12 de la deuxième couche C2 comprend le sixième matériau Mat6 , la direction du premier type de fibres forme un cinquième écart angulaire α3 correspondant à π-α1 avec la direction longitudinale d_{Long} et la direction du deuxième type de fibres forme un sixième écart angulaire β3, correspondant à π-β1 avec la direction longitudinale d_{Long}.

L'invention résout le problème technique en proposant une solution pour limiter les torsions générées par les variations de températures.

## Revendications

1. Ruban présentant un état stable entièrement enroulé (E1) et un état stable entièrement déroulé (E2) configuré pour des applications spatiales, les états intermédiaires (Ei) entre l'état entièrement enroulé (E1) et l'état entièrement déroulé (E2) comprenant une unique portion continue de ruban enroulée (2) de premier rayon de courbure (r₁) supérieur à une valeur seuil (rₛ) et une unique portion continue de ruban déroulée (3) de deuxième rayon de courbure (r₂) inférieur à ladite valeur seuil (rₛ), la valeur du deuxième rayon de courbure (r₂) étant continue sur ladite portion déroulée (3), le ruban (1) comprend un empilement (Emp) comprenant des couches fibrées (Cn) s'étendant selon une direction longitudinale (d_{Long}), ledit empilement (Emp) résultant possédant une symétrie par rapport à un plan longitudinal de ses fibres permettant la compensation des déformations de torsion générées par des variations de température.

2. Ruban selon la revendication 1 dans lequel la valeur seuil (rₛ) dépend des caractéristiques physico-chimiques des matériaux constituant le ruban (1).

3. Ruban selon la revendication 1 dans lequel la portion déroulée (3) est rectiligne.

4. Ruban selon l'une des revendications précédentes dans lequel l'empilement (Emp) comprend au moins deux couches (C1, C2), les couches comprenant un même premier matériau (Mat1) comprenant deux types de fibres unidirectionnelles, de directions différentes.

5. Ruban selon la revendication 4 dans lequel l'empilement comprend :
- une première couche (C1) comprenant deux parties (P11, P12) dont les fibres des deux parties ont une orientation symétriques longitudinalement, et dont une première partie (P12) est munie d'un premier type de fibres formant un premier écart angulaire (α1) et d'un deuxième type de fibres formant un deuxième écart angulaire (β1) avec la direction longitudinale (d_{Long}), et
- une deuxième couche (C2) comprenant deux parties symétriques disposées en vis-à-vis respectifs des deux parties symétriques de la première couche (C1) comprenant le premier type de fibres formant un cinquième écart angulaire (α3) avec la direction longitudinale (d_{Long}) et le deuxième type de fibres formant un sixième écart angulaire (β3) avec la direction longitudinale (d_{Long}), le premier écart angulaire (α1) et le cinquième écart angulaire (α3) étant supplémentaires.

6. Ruban selon l'une des revendications 1 à 3 dans lequel l'empilement comprend au moins quatre couches, les couches comprenant au moins un matériau comprenant des fibres unidirectionnelles.

7. Ruban selon la revendication 6 dans lequel l'empilement comprend :
- une première couche (C1) comprenant deux parties dont les fibres des deux parties ont une orientation symétrique longitudinalement et dont une première partie (P11) comprenant au moins un premier matériau (Mat 1) comprenant des fibres formant un premier écart angulaire (α1) avec la direction longitudinale (d_{Long}) et une deuxième partie (P21) comprenant au moins un deuxième matériau (Mat2), et
- une deuxième couche (C2) comprenant deux parties (P12, P22) symétriques disposées en vis-à-vis respectifs des deux parties (P11, P21) symétriques de la première couche (C1) et dont une première partie (P12) comprend le deuxième matériau, les fibres du deuxième matériau formant un troisième écart angulaire (α3) avec la direction longitudinale (d_{Long}), le premier écart angulaire (α1) et le troisième écart angulaire (α3) étant supplémentaires,
- la troisième couche (C3) est identique à la première couche (C1) et la quatrième couche (C4) est identique à la deuxième couche (C2), le premier (Mat1) et le deuxième matériau (Mat2) ayant des coefficients de dilatation sensiblement identiques.

8. Ruban selon la revendication 7 dans lequel le premier et le deuxième matériau sont identiques.

9. Ruban selon l'une des revendications précédentes comprenant au moins deux couches consécutives dont la première partie de l'une et la deuxième partie de l'autre sont monolithiques.

10. Ruban selon l'une des revendications précédentes comprenant en outre un substrat sur lequel est disposée la première couche de l'empilement.

11. Ruban selon l'une des revendications précédentes comprenant en outre une couche comprenant un matériau non tissé intercalé entre deux couches de l'empilement comprenant un matériau comprenant des fibres.

12. Ruban selon l'une des revendications précédentes dans lequel les couches comprennent au moins deux tronçons séparés selon une direction transverse perpendiculaire à la direction longitudinale et comprenant des matériaux fibrés différents.

13. Ruban selon l'une des revendications précédentes dans lequel la largeur du ruban selon la direction transverse varie selon la direction longitudinale.

14. Ruban selon l'une des revendications précédentes dans lequel le rayon de courbure selon la direction transverse du ruban sur la portion déroulée varie selon la direction transverse et/ou longitudinale.

15. Ruban selon l'une des revendications précédentes est un ruban bistable.
